# EUROPEAN PATENT APPLICATION

(11) **EP 4 806 256 A1**
(43) Date of publication of application: **16.09.2026**
(21) Application number: 25163804.5
(22) Date of filing: 14.03.2025
(51) Int. Cl.: A01F 15/08, A01F 15/10

(54) **FEEDRATE CONTROL FOR ROUND BALER**

(71) Applicant: CNH Industrial America LLC, New Holland, PA 17557 (US)
(72) Inventor: HUNT, Cory, New Holland, 17557 (US); TODDERUD, Stephen, New Holland, 17557 (US); O'NEAL, Shawn, New Holland, 17557 (US); LINDE, Karl, New Holland, 17557 (US)
(74) Representative: CNH Industrial IP Department

(57) **Abstract**

An agricultural vehicle includes a baler that is either connected to or integrated with the agricultural vehicle. The baler has a pickup unit including a rotatable reel for introducing crop material into a baling chamber of the baler. A drive system rotates the reel. A feedrate control system is configured for calculating a value indicative of an amount of crop entering the baler at the pickup unit and adjusting a function of the vehicle based on the calculated value.

## Description

### FIELD OF THE INVENTION

The present invention relates to agricultural balers, and, more particularly, to a round baler, and even more particularly to a system for controlling a pickup of the baler.

### BACKGROUND OF THE INVENTION

As is described in U.S. Patent No. 11,612,108, agricultural harvesting machines, such as balers, are used to consolidate and package crop material so as to facilitate the storage and handling of the crop material for later use. In the case of hay or silage, a mower-conditioner is typically used to cut and condition the crop material. In the case of straw, an agricultural combine discharges non-grain crop material from the rear of the combine defining the straw (such as wheat or oat straw) which is to be picked up by the baler. The cut crop material is typically raked into a windrow, and a baler, such as a large square baler or round baler, straddles the windrows and travels along the windrows to pick up the crop material and form it into bales.

A round baler may generally include a frame supported by wheels, a hydraulic system, a pickup unit to engage and lift the crop material into the baler, a cutting unit, a main bale chamber for forming a bale, and a wrapping mechanism for wrapping or tying a material around the bale after it has been formed in the main bale chamber. As the baler is towed (or moved) over a windrow, the pickup unit lifts the crop material into the baler. Thereafter, the crop material may be cut into smaller pieces by the cutting unit. As the crop material enters the main bale chamber, multiple carrier elements, e.g. rollers, chains and slats, and/or belts, will begin to roll a bale of hay within the chamber. These carrier elements may be movable so that the chamber can initially contract and subsequently expand to maintain an appropriate amount of pressure on the periphery of the bale. The size of the bale chamber may be variable, as described above, or the size of the bale chamber may be fixed. After the bale is formed and wrapped by the wrapping mechanism, the rear of the baler is configured to open for allowing the bale to be discharged onto the field.

Most round balers are towed by a tractor or other vehicle, and those round balers receive power from a power take-off (PTO) shaft extending from the tractor. In such an arrangement, the pickup unit rotates a constant speed due to its connection to the PTO shaft. It would be desirable to operate the pickup unit (and/or other components of the baler) using a variable source of power in the interest of efficiency (e.g., fuel, time and crop feedrate), controlling the shape of the bale, estimating the crop throughput of the baler, and more.

### SUMMARY OF THE INVENTION

According to one aspect, an agricultural vehicle includes a baler that is either connected to or integrated with the agricultural vehicle. The baler has a pickup unit including a rotatable reel for introducing crop material into a baling chamber of the baler. A drive system rotates the reel. A feedrate control system is configured for calculating a value indicative of an amount of crop entering the baler at the pickup unit and adjusting a function of the vehicle based on the calculated value.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 illustrates a side cross-sectional view of an agricultural round baler, in accordance with an exemplary embodiment of the present invention.
FIG. 2 depicts a schematic of a variable speed drive system for powering the pickup unit of the baler of FIG. 1.
FIG. 3 depicts a schematic of another variable speed drive system for powering the pickup unit of the baler of FIG. 1.
FIG. 4 depicts a schematic of yet another variable speed drive system for powering the pickup unit of the baler of FIG. 1.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

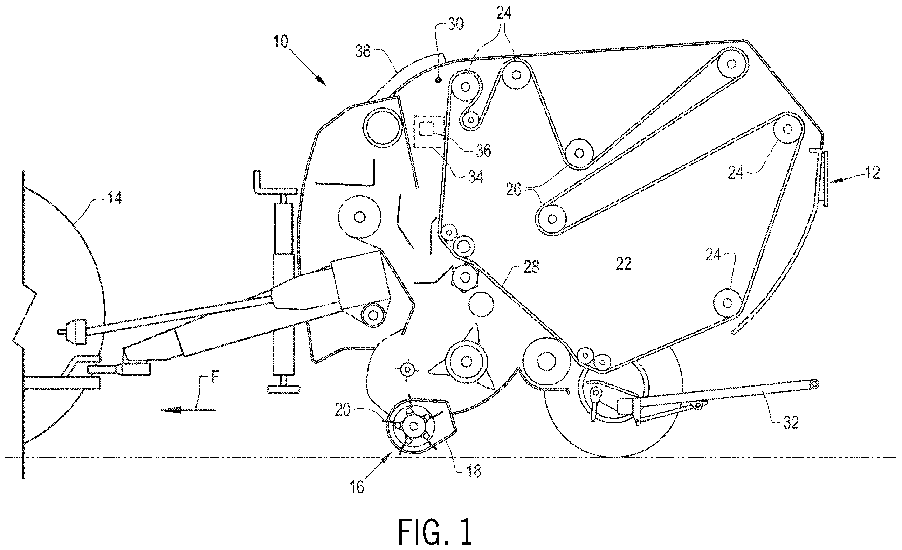

Referring now to the drawings, and more particularly to FIG. 1, there is shown a cross-sectional, side view of a round baler 10 which may be towed by a vehicle 14 in a forward direction of travel F. The vehicle 14 may be any desired vehicle, such as an agricultural vehicle in the form of a tractor 14.

Crop material may be lifted from windrows on the field into the baler 10 by a pickup unit 16. The pickup unit 16 includes a rotating pickup reel 18 with tine bars and tines 20, which move the crop rearward toward a variable bale chamber 22. The reel 18 is rotatable in an operating direction for lifting the crop material off of the ground and a reverse direction, i.e., opposite to the operating direction.

The bale chamber 22 is configured as a variable bale chamber 22 which includes multiple rolls or rollers 24, 26, such as various stationary rollers 24 and movable rollers 26, actuators and pivot arms coupled to the movable rollers 26, and at least one belt 28. The rollers 24, 26 may comprise a floor roller, starter roller, fixed roller(s), pivot roller(s), stripper roller, and/or follower roller(s). Together, the rollers 24, 26 and the belt(s) 28 create a round circulating chamber which expands in between an empty bale position and a full bale position for engaging and rolling the bale. As the bale grows inside the chamber 22 it begins to act upon the belts 28 such that the belts 28 pull against the pivot arms which in turn causes the movable rollers 26 to move upwardly so that the variable bale chamber 22 incrementally expands with the size of the bale. It should be understood that the invention is not limited to the particular details of the bale chamber, as the bale chamber may vary. Also, the baler is not limited to being a round baler. For example, the baler may be a small or large square baler.

When the bale reaches a predetermined size, the bale is wrapped with a wrapping material (e.g., mesh or twine) by a wrapper. Then, once fully wrapped, the bale is ejected out of the tail gate 12. The tail gate 12 may pivot upwardly about pivot axis 30 to open the bale chamber 22. Then, the bale rolls out of the bale chamber 22 and onto a bale ramp, accumulator, ejector or kicker 32, which urges the bale rearwardly away from the baler 10 so that the tail gate 12 may downwardly pivot unencumbered by the ejected bale.

The baler 10 can further include an electrical processing circuit 34, e.g. controller 34 with a memory 36, for conducting various baling procedures. For instance, the controller 34 can be configured for carrying out the bale discharge operation. Hence, the controller 34 may open the tail gate 12 via accompanying actuators upon sensing a full bale condition by a bale-size sensor (not shown). Controller 34 may communicate with the controller of tractor 14 in order, for example, to adjust the speed of tractor 14. Although controller 34 is shown as being associated with baler 10, it should be understood that controller 34 may be associated with tractor 14. Further details in connection with the baler 10 may be found in U.S. Patent No. 11,612,108.

As noted above, most round balers are towed by a tractor or other vehicle, and those round balers receive power from a power take-off (PTO) shaft extending from the tractor. In such an arrangement, the pickup unit rotates at a constant speed due to its connection to that PTO shaft. It would be desirable to operate the pickup unit (and/or other components of the baler) using a variable source of power in the interest of efficiency (fuel, time, crop throughput, etc.), controlling the shape of the bale, estimating the crop throughput of the baler (i.e., the amount of crop entering the baler to be processed by the baler), and more.

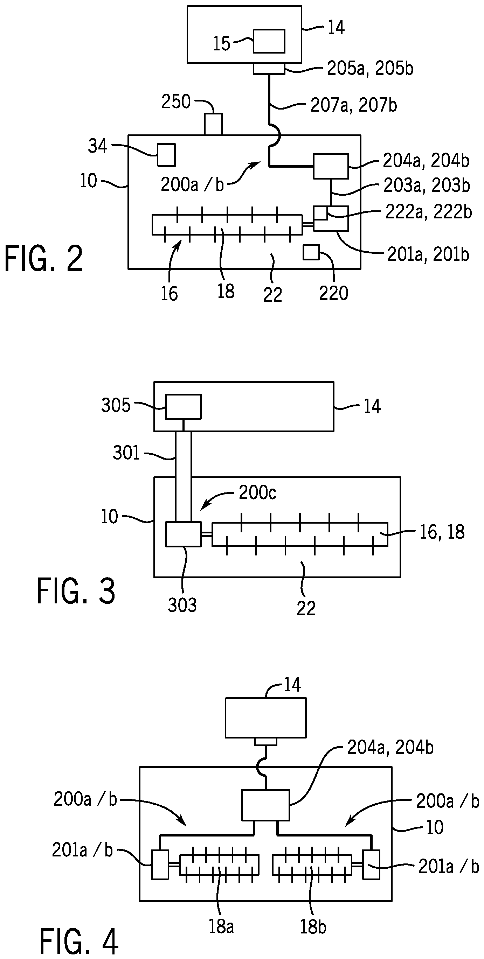

Turning now to FIGs. 2-4, the reel 18 of the pickup unit 16 may be powered by a variable-speed drive 200. Drive 200 can take multiple forms, and multiple variants of the drive 200 (i.e., 200a, 200b, 200c, etc., which may be referred to either individually or collectively as drive 200) are described hereinafter.

Turning specifically to FIG. 2, in which a variable-speed drive in the form of a hydraulically powered drive 200a is shown, drive 200a can include a hydraulic motor 201a which is capable of metering the power supplied to the pickup unit 16. Motor 201a receives the fluid flow from a pump 15, which may be located onboard the tractor 14, for example. Drive 200a may also include the fluid lines connected thereto as well as the circuitry for operating the motor 201a. The motor 201a may receive fluid power directly from a hydraulic line 203a. The line 203a fluidly connects the motor 201a to a fluid distributor 204a. Fluid distributor 204a may deliver power to a plurality of components of baler 10. Fluid distributor 204a is fluidly connected by a fluid line 207a to a remote hydraulic hookup 205a on tractor 14. The speed of motor 201a may be controlled by controller 34, as required. Alternatively, another controller, such as a controller on board the tractor 14, may be responsible for controlling the operation of motor 201a. It is noted that fluid distributor 204a is optional, and other means for delivering hydraulic fluid to motor 201a are envisioned.

As an alternative to hydraulically powered drive 200a, the drive 200 may be an electrically powered drive 200b. The drive 200b generally comprises an electric motor 201b that is connected by electric line 203b to a distributor 204b. Drive 200b may also include the electrical lines connected thereto as well as the circuitry for operating the motor 201b. Distributor 204b may deliver power to various systems of baler 10. Distributor 204b is electrically connected by a line 207b to a remote electrical hookup 205b on tractor 14. The speed of motor 201b may be controlled by controller 34, as required. Controller 34 may be responsible for delivering power to motor 201b, as required. Alternatively, another controller, such as a controller on board the tractor 14, may be responsible for delivering power to motor 201b. It is noted that distributor 204b is optional, and other means for delivering electricity to motor 201b are envisioned.

Turning now to FIG. 3, as an alternative to a hydraulically or electrically powered drive 200, the drive 200c may be powered by (or comprise) the power take-off (PTO) shaft 301 of tractor 14. The drive 200c constitutes or forms part of a mechanical drive line. PTO shaft 301 is powered by a motor 305 of tractor. Motor 305 may also be responsible for driving the ground wheels of tractor 14. PTO shaft 301 may power the pickup unit 16 of the baler 10 in a variable manner. Shaft 301 could be a variable speed PTO shaft on the tractor, whereby the variable speed PTO shaft is connected to the pickup reel 18 by a power transmission device 303 in the form of a gear box, for example. The variable speed PTO shaft 301 is capable of metering the speed of the pickup unit 16 of the baler 10. The speed of shaft 301 may be adjusted using controls of the tractor 14.

Alternatively, if the PTO shaft 301 is a traditional constant speed PTO shaft and not a variable speed PTO shaft, then the power transmission device 303 may be a system-controlled clutch or a disconnect clutch that is configured for either permitting or preventing power to be transferred to unit 16. The controller 34 may be electrically connected to the clutch for controlling the clutch to meter the rotational speed of the reel 18 of the pickup unit 16. As another alternative, the power transmission device 303 may be a mechanical variator (such as disclosed in U.S. Patent No, 4,311,061), a friction disc, a hydraulic CVT transmission, etc. It is noted that the aforementioned devices could also be used with a variable-speed PTO shaft, if so desired.

Turning now to the first benefit flowing from using a variable-speed pickup unit drive 200, using a variable-speed pickup unit drive can result in various efficiencies in terms of fuel savings, time savings, reduced component wear, and maximizing crop throughput. In a traditional baler setup, the pickup unit rotates at a constant speed due to its connection to that PTO shaft, and the pickup unit runs continuously. For example, the traditional pickup unit continues to operate even when it is not required for operation during the wrapping and ejecting bales as well as when passing headland areas or between windrows. This traditional setup can result in parasitic loss of power, loss of fuel efficiency and increased wear on components. By using the variable-speed drive 200, the drive 200 operates the pickup unit 16 only as required thereby avoiding the aforementioned disadvantages associated with continuously operating the baler 10 at a constant speed.

The ability to activate or deactivate the drive 200 of the pickup unit 16 can be automated and based on a number of conditions including (i) activating drive 200 when a sensor, such as sensor 250, senses a windrow on the field, (ii) deactivating drive 200 when baler is wrapping and/or ejecting bales, and/or (iii) activating drive 200 when crop material is detected by a sensor associated with either baler 10 or tractor 14.

Turning now to the second benefit flowing from using a variable-speed pickup unit drive 200, the drive 200 can be used to adjust the shape of the bale while the bale is forming in the bale chamber 22. Most operators seek to produce a bale having a uniform circular cross-section. On the other hand, it may also be desirable to produce a bale having a non-uniform shape in order to prevent the bale from rolling away when placed on a hill. The drive 200 can be operated to adjust the cross-sectional shape of the bale to achieve either a uniform shape or a non-uniform shape, as desired. Stated differently, variable drive 200 can be used to impact the cross-sectional shape of a bale by either achieving or correcting for a non-round bale shape.

For an operator seeking to produce a bale having a uniform shape, as a first step, the controller 34 is operated to detect the bale shape based on the readings provided by one or more bale-shape sensors 220 (FIG. 2). Such bale shape sensors are described in U.S. Patent No. 9,585,310; 8,571,744; and 7,437,866, for example. Alternatively, the bale shape may be detected using a non-contact measurement method that senses the outer surface of the bale. As another alternative, and with reference to the embodiment of FIG. 4, which is described later, the bale shape may be detected through a comparison of the belt tension/stretch from the left to right sides of the baler, for example.

The circumferential shape of the bale can be adjusted by either speeding up or slowing down the pickup unit 16. By increasing the rotational speed of the pickup unit 16 for a brief moment in time, the additional crop flow (due to the increased speed) can be added to an undersized area of the bale thereby making the cross-sectional of the bale more uniform. The circumferential location of the undersized area of the bale is known as a result of the bale shape sensor 220, and, the increased speed of the pickup unit is timed such that the increased crop flow is coextensive with the known location of the undersized area of the bale. The time delay between increasing the speed of the pickup unit and the moment that the additional crop flow reaches the undersized area may be a known value that is derived from factory testing. It is also noted that by directly monitoring the rotation speed of the rollers 24/26, the linear speed of the belt 28, or the rotation of the crop material in the bale chamber 22, the speed changes of the pickup unit 16 can be timed in conjunction with the rotation of the bale. In this way, the bale shape can be improved during the period of time that the bale is being formed.

In a similar way, the bale shape can be intentionally made to be non-uniform (i.e., non-circular). In scenarios where bales are likely to roll down a hill, the pickup speed can be varied so that the bale can be intentionally shaped with two, three, or four bulbous portions on the outer surface of the bale. To produce these bulbous portions, the speed of the pickup unit is either increased or decreased at predetermined intervals.

With regard to the predetermined intervals, for a bale that is intended to have two lobes, the pickup might need to increase and then decrease speed twice within the time of one rotation of the bale. However, there may be instances where the pickup speed cannot be changed in a time period less than one rotation of the bale. In such an instance, the pickup could be timed by the controller 34 at a multiple of the desired frequency so that crop can be added at a greater/lesser rate to the outer surface of the bale on every second or third rotation of the bale, for example.

Turning now to FIG. 4, the right and left sides of the bale may be individually controlled to tailor the cross-sectional shape of the bale. To accomplish this task, the pickup reel 18 may be divided into two separate pickup reels 18a and 18b. Reels 18a and 18b, taken together, extend along the transverse width of the baler 10. Each reel 18a and 18b may be powered by a separate variable speed drive 200a/b. Each variable speed drive 200a may include a hydraulic motor 201a that is provided fluid by fluid distributor 204a, as described above with reference to FIG. 2. As another alternative, each variable speed drive 200b may include an electric motor 201b that is powered by a power distributor 204b, as described above with reference to FIG. 2.

The reels 18a and 18b can be separately controlled by the variable speed drives 200a/b to make the cross-sectional shape of the bale uniform. Specifically, the reels 18a and 18b can be either accelerated or decelerated, as required, to direct the crop material to specific locations on the left and/or right hand side of the bale.

Turning now to the third benefit flowing from using a variable-speed pickup unit drive 200, the drive 200 can be used to estimate crop throughput through the baler 10. The estimate may be used for various purposes including maximizing the efficiency of the baler 10, which ties into the aforementioned first benefit. The crop throughput may also be referred to as the amount of crop entering the baler to be processed (i.e., baled) by the baler.

Depending upon the type of variable drive(s) 200, the estimated crop throughput can be used to control operation of the pickup unit 16 (or other system of baler 10), the rotational speed of the PTO shaft 301 and/or the ground speed of tractor 14. The ground speed of tractor 14 could be changed, e.g., by increasing the engine speed of tractor 14, changing a transmission gearing or setting of tractor, etc.

As background, crop throughput plays an important role in the efficient baling operation. Baling operations are most efficient when the tractor can move through a field and maintain a relatively high load while baling. There is always some amount of "overhead" operating costs to operate a tractor and baler in terms of fuel usage, ground compaction, operator wage. The goal is to bale as much crop material as possible relative to those costs, i.e., minimize the time spent in the field, minimize the number of passes driven over the field, and maximize the rate at which the crop is packaged into a bale (throughput).

Traditionally, throughput of a round baler is estimated by weighing the finished bale and/or utilizing the LIDAR data, for example, to measure volume of crop going into the baler. Weighing the finished bale only provides useful data after the bale is formed and the LIDAR data provides no indication of crop density, and can be costly and subject to dust interference.

Independently driving the reel 18 using the variable drive 200 allows for the load on the pickup unit 16 to be measured separately from other systems of the baler 10. For example, if the drive 200 is an electric drive 200b, the current draw of the motor 201b can be calculated using a sensor 222b. Although sensor 222b is shown associated with motor 201b, it should be understood that the position of sensor 222b can vary. For example, sensor 222b may be either directly or indirectly connected to line 207b and located within tractor 14. The crop throughput can be calculated or estimated using a pre-determined correlation between crop throughput and the measured current draw. The correlation may be saved in a look-up table, for example. The correlation may be linear and/or calculated by a processor.

Alternatively, if the drive 200 is a hydraulic drive 200a, a torque load can be calculated by measuring the hydraulic pressure using a sensor 222a that is located in the fluid circuit that provides flow to the pickup unit 16. Sensor 222a may be located upstream of the motor 201a to measure the pressure that is formed in the input line 203a due to the resistance of the pickup unit 16 to rotate. Another sensor may also be located downstream of the motor so that a pressure drop across the motor 201a can be calculated. In some cases, a sufficiently accurate measurement can be achieved by assuming that the outlet of the motor 201a has a low fixed pressure.

Power can be calculated based upon the calculated torque load. Finally, crop throughput can be calculated or estimated based on the calculated power. The correlation may be saved in a look-up table or calculated by a processor.

The following formulas may be used to calculate torque and power for a hydraulic drive 200a. $Torque = Pressure ∗ Displacement / \left(2∗pi\right)$ $Power = Torque ∗ Speed / 63,025 ,$ where the Power is calculated in horsepower (HP), Torque is in units of lb-in., and Speed is the speed of the motor in units of rpm. The Speed may be the maximum rated speed of the motor, which is a known quantity.

Once Power is calculated, that value can be used to compare relative throughput from one portion of the field to another. It is also possible to use an alternative on-the-go style calibration that could be implemented using bale weight information (e.g., on-board scale or external user input measured by transporting the bale(s)) to calibrate relative yield maps for fields that were already baled. Also, as an alternative to using Equation 1, the mechanical drive of the pickup 16 may include torque and/or speed sensors.

Baler 10 includes a feedrate control system that utilizes the above-described measured or estimated crop throughput to control operation of the pickup unit 16 (or other system of baler 10), the rotational speed of the PTO shaft 301 and/or the ground speed of tractor 14, depending upon the type of variable drive(s) 200 employed. The feedrate control system may constitute the controller of the baler and/or the tractor, for example.

As background to the need for a feedrate control system, in a round baling operation, operators often push to drive as fast as they can to form a bale quickly which can result in plugging of the baler. Alternatively, some operators may operate slowly to avoid plugging and miss the opportunity to improve their efficiency by speeding up when baling low-volume sections of crop. Both of these scenarios could be improved by implementing a feed rate control system that uses the above-described estimated crop throughput to control operation of the pickup unit 16 (or other system of baler 10), the rotational speed of the PTO shaft 301 and/or the ground speed of tractor 14, depending upon the type of variable speed drive(s) 200.

Operation of the pickup unit 16 (or other system of baler 10), the rotational speed of the PTO shaft 301 and/or the ground speed of tractor 14 can be controlled to promote optimal bale formation and increased field efficiency using the above-described estimated crop throughput. The above-described estimated crop throughput may be used to perform any one of the following functions: (a) increase the ground speed of tractor 14 if the estimated crop throughput is below a threshold value; (b) control the rotational speed of variable-speed PTO shaft 301 based upon a look-up table or algorithm correlating the estimated crop throughput to the rotational speed; (c) control the speed of motor 201a based upon a look-up table or algorithm correlating the estimated crop throughput to the motor speed; and/or (d) control the speed of motor 201a based upon the detected ground speed of tractor 14 to achieve an optimal relationship therebetween (using a feedrate control algorithm would cause the pickup speed to increase with throughput because the tractor will be driven at a higher speed to achieve higher throughput).

As an alternative or in addition to using the variable drive(s) 200 to estimate crop throughput, LIDAR or other type of non-contact sensor 250 (FIG. 1) may be positioned at the front of either baler 10 or tractor 14 to detect the size/shape of the incoming swath. And, that crop throughput measured by the sensor may be used in any of the functions (a) through (d) described above.

## Claims

1. An agricultural vehicle comprising:
a baler that is either connected to or integrated with the agricultural vehicle, the baler having a pickup unit including a rotatable reel for introducing crop material into a baling chamber of the baler;
a drive system for rotating the reel; and
a feedrate control system that is configured for calculating a value indicative of an amount of crop entering the baler at the pickup unit and adjusting a function of the vehicle based on the calculated value.

2. The agricultural vehicle of claim 1, wherein the drive system comprises (i) an engine of the vehicle, (ii) a power take-off (PTO) shaft of the vehicle that receives power from the engine, and (iii) a PTO shaft of the baler that is connected to the PTO shaft of the vehicle and the reel for rotating the reel.

3. The agricultural vehicle of claim 2, wherein the feedrate control system is configured to adjust a ground speed of the vehicle based upon the calculated value.

4. The agricultural vehicle of any preceding claim, wherein the feedrate control system comprises a sensor for sensing the amount of crop entering the baler at the pickup unit, and the feedrate control system is configured for calculating the value indicative of the amount of crop entering the baler at the pickup unit based upon the sensed amount of crop.

5. The agricultural vehicle of claim 4, wherein the sensor is a LIDAR sensor or a non-contact sensor.

6. The agricultural vehicle of any preceding claim, wherein the drive system is a variable speed drive system that comprises a hydraulic motor having an output shaft that is connected to the reel for rotation of the reel.

7. The agricultural vehicle of claim 6, wherein the hydraulic motor is fluidly connected to a fluid distributor that is configured to be fluidly connected to a pump on the tractor.

8. The agricultural vehicle of claim 6 further comprising one or more sensors for measuring a hydraulic pressure of a fluid within a hydraulic circuit to which the hydraulic motor is connected.

9. The agricultural vehicle of claim 8, wherein the feedrate control system is configured for calculating the value indicative of the amount of crop entering the baler at the pickup unit based on the measured hydraulic pressure.

10. The agricultural vehicle of claim 9, wherein the controller is configured to adjust a speed of the variable speed drive system as a function of the calculated value.

11. The agricultural vehicle of any preceding claim, wherein the drive system is a variable speed drive system that comprises an electric motor having an output shaft that is connected to the reel for rotation of the reel.

12. The agricultural vehicle of claim 11, wherein the electric motor is configured to be electrically connected to an electrical port on the tractor.

13. The agricultural vehicle of claim 11 further comprising a sensor for measuring a current draw of the electric motor.

14. The agricultural vehicle of claim 13, wherein the feedrate control system is configured for calculating the value indicative of the amount of crop entering the baler at the pickup unit based on the measured current draw.

15. The agricultural vehicle of claim 14, wherein the controller is configured to adjust a speed of the variable speed drive system as a function of the calculated value.
